# EUROPEAN PATENT APPLICATION

(11) **EP 4 239 004 A1**
(43) Date of publication of application: **06.09.2023**
(21) Application number: 23159817.8
(22) Date of filing: 03.03.2023
(51) Int. Cl.: C08G 59/14, C08G 59/26, C08G 59/50, C09D 163/00, C09D 163/04

(54) **COATING COMPOSITION**

(30) Priority: 03.03.2022 US 202263316054 P
(71) Applicant: Roller Bearing Company of America, Inc., Oxford, CT 06478 (US)
(72) Inventor: NOLAN, Richard, Cheshire (US)
(74) Representative: Bjerkén Hynell KB

(57) **Abstract**

A coating composition includes an epoxy resin including an epoxy monomer, a toughener and one or more self-lubricating fillers. The coating composition can be employed in a bearing (10) that has an outer member (20) that has a radially inwardly facing surface (22) that defines an interior area. An inner member (40) is disposed in the interior area. The inner member (40) has a radially outward facing bearing surface (42). The coating composition (30) is disposed between the radially inwardly facing surface (22) and the radially outward facing bearing surface (42).

## Description

### CROSS REFERENCE TO RELATED APPLICATION

This application claims the benefit of prior-filed, co-pending U.S. Provisional Patent Application No. 63/316,054, filed on March 3, 2022, the entire contents of which is incorporated herein by reference in its entirety

### FIELD OF THE INVENTION

The present invention is directed to a coating composition that includes an epoxy resin; a toughener; and a self-lubricating filler, and more particularly to a toughened coating composition that is fatigue, crack and wear resistant, resistant to chemical degradation, has good adherence properties and has low friction, and is moldable.

### BACKGROUND

Prior art coating compositions are typically used to coat a surface of a substrate to provide a wear resistant and low friction coated surface thereon that is in sliding engagement with another substrate. However, prior art coating compositions tend to have poor wear and fatigue resistance and therefore have a propensity for premature wearing and developing fatigue cracks. In addition, prior art coating compositions tend to have poor resistance to chemical exposure and exhibit, *e.g.,* physical degradation (*e.g*., undesirable dimensional changes) and decreased strength upon exposure to solvents. In addition, some prior art coating compositions are known to have a high degree of toxicity.

Prior art coatings typically employ solvents to aid in processing by modifying viscosity. The prior art coatings can be difficult to adhere to the substrate. Prior art coating compositions are known to be difficult to machine with conventional machining tools. In addition, some prior art coatings have poor latency which can result in premature curing thereby leaving insufficient time to apply the coating to a substrate. For example, some prior art coatings age or cure prematurely leaving it inflexible and brittle such that, during installation, the coating can no longer conform to contours of a substrate without cracking.

Thus, there is a need for an improved coating composition that can overcome the foregoing problems.

### SUMMARY

According to aspects illustrated herein, there is disclosed a coating composition that includes an epoxy resin having an epoxy monomer, a toughener, and one or more self-lubricating fillers. The coating composition is moldable and/or machinable.

In some embodiments, the epoxy monomer is diglycidyl ether of bisphenol F.

In some embodiments, the coating composition includes an epoxy curative such as a latent curing agent. In some embodiments, the latent curing agent is a diamine epoxy curative, such as 4,4'-Diaminodiphenyl sulphone (44DDS). In some embodiments, the epoxy resin includes one or more oxirane groups. In some embodiments, the oxirane group is ethylene oxide.

In some embodiments, the toughener is a thermoplastic polyhydroxyether. In some embodiments, the thermoplastic polyhydroxyether includes one or more sidechain hydroxyl groups which form ether bonds with one or more oxirane groups of the epoxy resin.

The thermoplastic polyhydroxyether has a first glass transition temperature and when the thermoplastic polyhydroxyether is added to the epoxy resin and cured, the coating composition has a second glass transition temperature that is greater than the first glass transition temperature.

In some embodiments, the coating composition has reinforcing fillers therein. The reinforcing fillers include glass fibers, glass particles, aramid fibers, carbon fiber, carbon particles, ceramic fiber, ceramic particles, polyester fibers, polyhydroxyether fibers, and nylon fibers.

In some embodiments, the self-lubricating filler includes polytetrafluoroethylene, such as polytetrafluoroethylene in a fiber form and/or a powder form. In some embodiments, the polytetrafluoroethylene is in a fiber form treated with a sodium napthalene etch. In some embodiments, the self-lubricating fillers include graphite, graphite fluoride, hexagonal boron nitride, zinc oxide, molybdenum disulfide, and/or tungsten disulfide.

There is further disclosed herein a bearing that includes an outer member that has a radially inwardly facing surface that defines an interior area. The bearing includes an inner member that is disposed in or partially in the interior area of the outer member. The inner member has a radially outward facing bearing surface. The coating composition is disposed between the radially inwardly facing surface and the radially outward facing bearing surface. Preferably, the coating composition is adhered to the radially inwardly facing surface and is in sliding engagement with the radially outward facing bearing surface.

Any of the foregoing embodiments may be combined.

### BRIEF DESCRIPTION OF THE DRAWINGS

Referring now to the Figures, which are exemplary embodiments, and wherein the like elements are numbered alike:
FIG. 1 is a cross sectional view a bearing with the coating composition of the present invention adhered to a portion of the bearing;
FIG. 2 is sketch of the chemical repeat structure of a polyhydroxyether thermoplastic shown with a hydroxyl group;
FIG. 3 is a sketch of the chemical repeat structure of an epoxy monomer, diglycidyl ether of bisphenol F, shown with oxirane groups; and
FIG. 4 is a sketch of the chemical repeat structure of epoxy phenol novolac with oxirane groups.

### DETAILED DESCRIPTION

The present invention resides in a coating composition 30 that is composed of an epoxy resin which includes an epoxy monomer, a toughener, and one or more self-lubricating fillers. The toughener has utility in the coating composition 30 by providing superior wear and fatigue resistance compared to prior art coatings. The toughener is present in the coating composition 30 in an amount effective to improve wear resistance and/or fatigue resistance. The self-lubricating filler has utility in the coating composition 30 by providing superior wear resistance and low friction compared to prior art coatings. The self-lubricating filler is present in the coating composition 30 in an amount effective to improve wear resistance and/or friction.

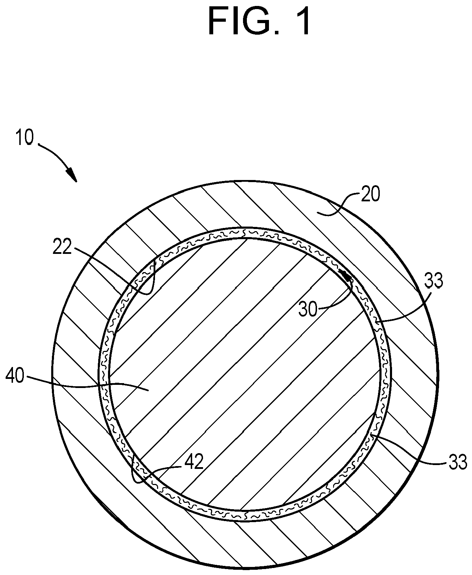

As shown in FIG. 1, the coating composition 30 and has utility for use in bearings 10. For example, the bearing 10 includes an outer member 20 having a radially inwardly facing surface 22 that defines an interior area. The bearing 10 includes an inner member 40 disposed at least partially in the interior area of the outer member 20. The inner member 40 has a radially outward facing bearing surface 42 thereon. The coating composition 30 is adhered to the radially inwardly facing surface 22 and is in sliding engagement with the radially outward facing bearing surface 42. For example, the coating composition 30 has a high degree of conformity with and is molded to the radially inwardly facing surface 22. The high degree of conformity results in low bearing clearance between the radially outward facing bearing surface 42 and the radially inwardly facing surface 22 and uniform contact pressure distribution when the bearing 10 is subject to loads. While the coating composition 30 is described as being adhered to the radially inwardly facing surface 22 and is in sliding engagement with the radially outward facing bearing surface 42, the present invention is not limited in this regard as the coating composition 30 can be adhered to the radially outward facing bearing surface 42 and in sliding engagement with the radially inwardly facing surface 22.

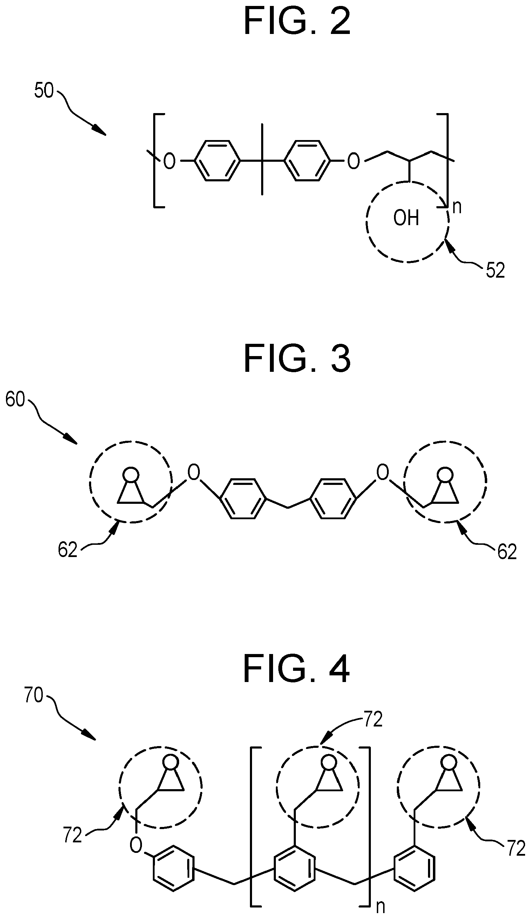

In some embodiments, the epoxy monomer includes diglycidyl ether of bisphenol F as shown in FIG. 3, designated with element number 60 and shown with oxirane groups 62 therein. Another example of a suitable epoxy monomer is epoxy phenol novolac, as shown in FIG. 4, designated with element number 70, and shown with oxirane groups 72 therein. In some embodiments, the epoxy monomer includes an epoxy curative, such as, for example, a latent curing agent. In some embodiments, the latent curing agent includes a diamine epoxy curative, such as, for example 4,4'-Diaminodiphenyl sulphone (44DDS), which is highly latent. The high latency of the coating composition can be quantified in terms of being stable at ambient temperature for at least three days. The high degree of latency allows the coating composition to be stable in a b-stage (i.e., partially cured stage). In some embodiments, the epoxy resin includes one or more one oxirane groups (also referred to in the relevant art as an epoxide group) such as, ethylene oxide.

In some embodiments, the toughener includes a thermoplastic polyhydroxyether. In some embodiments, the thermoplastic polyhydroxyether includes one or more sidechain hydroxyl groups. As shown in FIG. 2, the chemical repeat structure of the polyhydroxyether thermoplastic 50 has the hydroxyl group 52 highlighted by a dashed line circle 52. The sidechain hydroxyl group forms ether bonds with the oxirane group of the epoxy resin.

The thermoplastic polyhydroxyether has a first glass transition temperature. When the thermoplastic polyhydroxyether is added to the epoxy resin and after curing in an oven or autoclave, the coating composition has a second glass transition temperature that is greater than the first glass transition temperature. In some embodiments, the second glass transition temperature is about 250 degrees Fahrenheit (121 °C) or greater, or about 250 degrees Fahrenheit (121 °C) to about 550 degrees Fahrenheit (288 °C).

The coating composition 30 includes a primary self-lubricating filler such as a polytetrafluoroethylene (PTFE) material in a fiber form and/or a powder form. In some embodiments, the polytetrafluoroethylene is in a fiber form treated with a sodium napthalene etch to increase the bond strength between the surface of polytetrafluoroethylene and the epoxy resin, resulting in a stronger coating. Use of polytetrafluoroethylene fibers is preferred because of the superior crack arresting properties that assist in making the coating composition more crack resistant than prior art coatings.

In some embodiments, the coating composition 30 includes secondary self-lubricating fillers which are added to improve the wear and friction properties of the coating composition 30. The secondary self-lubricating fillers include graphite, graphite fluoride, hexagonal boron nitride, zinc oxide, molybdenum disulfide, and tungsten disulfide and a combination of any two or more of the foregoing.

In some embodiments, the coating composition 30 includes at least one reinforcing filler 33 dispersed therein. The reinforcing filler 33 may include random short glass fibers, glass particles, short aramid fibers, short carbon fiber, carbon particles, short ceramic fiber, ceramic particles, short polyester fibers, short polyhydroxyether fibers, and short nylon fibers, and a combination of any two or more of the foregoing. In one embodiment, the reinforcing filler 33 is a continuous reinforcement made up of continuous fibers as in the case of woven fabrics, felts or synthetic wools. The continuous reinforcement may include PTFE fibers, aramid fibers, polyester fibers, glass fibers, polyimide fibers, polyamide fibers, polyhydroxyether fibers, carbon fibers, or any combination of the foregoing. The reinforcing filler 33 is added to the composition 30 in an amount effective to improve structure of the composition.

The components of the composition 30 can be combined in any manner effective to produce the composition using acceptable methods, procedures and/or technology. It is contemplated that the component of the composition 30 can be combined in any manner without regards to a specific sequence or order.

The coating composition 30 is moldable and, in some embodiments, machinable. In addition, the coating composition has a high chemical resistance when cured, including resistance to degradation from exposure to water, ethanol, methyl ethyl ketone (MEK) and hydrocarbon oils.

The following clauses that are listed as items represent embodiments of the present invention.

Item 1 - A coating composition comprising: an epoxy resin comprising at least two epoxy monomers; at least two tougheners, and at least two self-lubricating fillers.

Item 2 - The coating composition of item 1, comprising at least two epoxy curatives.

Below is a table that lists a variety of materials that can form a coating composition. Specifically, the table is divided into columns for resins, tougheners, fillers, and curative materials. Each row represents a potential coating composition consisting of one or more of a specific resin, toughener, filler, and curative material. Although the table illustrates the composition consisting one at least one of each, one or more of a resin, toughener, filler, and curative material may be omitted from a specific composition. Some examples of the coating composition may include two different kinds of fillers (e.g., a self-lubricating filler and a reinforcing filler). For example, one or more of the self-lubricating fillers listed in column 3, row 1 may be incorporated into a composition with one or more of the reinforcing fillers listed in the remainder of column 3. Additionally, although not listed in the table, one or more of the tougheners may be used in the same composition.

| **Resin** | **Toughener** | **Filler (Self-lubricating comprising at least one of Polytetrafluoroethylene (PTFE), Fumed Silica, Graphite, Graphite Flouride, Hexagonal Boron Nitride, Zinc Oxide, and Molybdenum Disulfide, and one or more of the following reinforcing fillers)** | **Curative** |
|---|---|---|---|
| Diglycidal Ether of Bisphenol F | Thermoplastic Polyhydroxyether | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Diglycidal Ether of Bisphenol F + Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Diglycidal Ether of Bisphenol F | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Diglycidal Ether of Bisphenol F + Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Diglycidal Ether of Bisphenol F | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |
| Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |
| Diglycidal Ether of Bisphenol F + Epoxy Phenol Novolac | Thermoplastic Polyhydroxyether | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |
| Diglycidal Ether of Bisphenol F | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Diglycidal Ether of Bisphenol F + Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 4,4'-Diaminodiphenyl sulphone (44DDS) |
| Diglycidal Ether of Bisphenol F | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Diglycidal Ether of Bisphenol F + Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) |
| Diglycidal Ether of Bisphenol F | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |
| Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |
| Diglycidal Ether of Bisphenol F + Epoxy Phenol Novolac | Carboxyl Terminated Butadiene Acrylonitrile | Glass Fibers, Glass Particles, Aramid Fiber, Carbon Fiber, Carbon Particle, Ceramic Fiber, Polyester Fiber, and Nylon Fiber | 3,3'-Diaminodiphenyl sulphone (33DDS) + 4,4'-Diaminodiphenyl sulphone (44DDS) |

As will be apparent to those skilled in the art, various modifications, adaptations and variations of the foregoing specific disclosure can be made without departing from the scope of the invention claimed herein. The various features and elements of the invention described herein may be combined in a manner different than the specific examples described or claimed herein without departing from the scope of the invention. In other words, any element or feature may be combined with any other element or feature in different embodiments, unless there is an obvious or inherent incompatibility between the two, or it is specifically excluded.

References in the specification to "one embodiment," "an embodiment," "some embodiments," etc., indicate that the embodiment described may include a particular aspect, feature, structure, or characteristic, but not every embodiment necessarily includes that aspect, feature, structure, or characteristic. Moreover, such phrases may, but do not necessarily, refer to the same embodiment referred to in other portions of the specification.

The singular forms "a," "an," and "the" include plural reference unless the context clearly dictates otherwise. Thus, for example, a reference to "a plant" includes a plurality of such plants. It is further noted that the claims may be drafted to exclude any optional element. As such, this statement is intended to serve as antecedent basis for the use of exclusive terminology, such as "solely," "only," and the like, in connection with the recitation of claim elements or use of a "negative" limitation. The terms "preferably," "preferred," "prefer," "optionally," "may," and similar terms are used to indicate that an item, condition or step being referred to is an optional (not required) feature of the invention.

The term "and/or" means any one of the items, any combination of the items, or all of the items with which this term is associated. The phrase "one or more" is readily understood by one of skill in the art, particularly when read in context of its usage.

Each numerical or measured value in this specification is modified by the term "about". The term "about" can refer to a variation of ± 5%, ± 10%, ± 20%, or ± 25% of the value specified. For example, "about 50" percent can in some embodiments carry a variation from 45 to 55 percent. For integer ranges, the term "about" can include one or two integers greater than and/or less than a recited integer at each end of the range. Unless indicated otherwise herein, the term "about" is intended to include values and ranges proximate to the recited range that are equivalent in terms of the functionality of the composition, or the embodiment.

As will be understood by the skilled artisan, all numbers, including those expressing quantities of reagents or ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible sub-ranges and combinations of sub-ranges thereof, as well as the individual values making up the range, particularly integer values. A recited range (e.g., weight percents or carbon groups) includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

As will also be understood by one skilled in the art, all language such as "up to", "at least", "greater than", "less than", "more than", "or more", and the like, include the number recited and such terms refer to ranges that can be subsequently broken down into sub-ranges as discussed above. In the same manner, all ratios recited herein also include all sub-ratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

## Claims

1. A coating composition comprising:
an epoxy resin comprising an epoxy monomer;
a toughener; and
at least one self-lubricating filler.

2. The coating composition of claim 1, wherein the epoxy monomer comprises diglycidyl ether of bisphenol F.

3. The coating composition of any of the preceding claims, further comprising an epoxy curative.

4. The coating composition of claim 3, wherein the epoxy curative is a latent curing agent, and wherein the latent curing agent preferably comprises a diamine epoxy curative.

5. The coating composition of claim 4, wherein the diamine epoxy curative comprises 4,4'-Diaminodiphenyl sulphone (44DDS).

6. The coating composition of any of the preceding claims, wherein the epoxy resin comprises at least one oxirane group, and wherein the oxirane group preferably is ethylene oxide.

7. The coating composition of any of the preceding claims, wherein the toughener comprises a thermoplastic polyhydroxyether.

8. The coating composition of claim 7, wherein the thermoplastic polyhydroxyether comprises at least one sidechain hydroxyl group.

9. The coating composition of claim 8, wherein the sidechain hydroxyl group forms ether bonds with at least one oxirane group of the epoxy resin;
the thermoplastic polyhydroxyether has a first glass transition temperature;
wherein when the thermoplastic polyhydroxyether is added to the epoxy resin and cured, the coating composition has a second glass transition temperature than is greater that the first glass transition temperature.

10. The coating composition of any of the preceding claims, further comprising a reinforcing fillers selected from the group consisting of glass fibers, glass particles, aramid fibers, carbon fiber, carbon particles, ceramic fiber, ceramic particles, polyester fibers, polyhydroxyether fibers, and nylon fibers.

11. The coating composition of any of the preceding claims, wherein the at least one self-lubricating filler comprises polytetrafluoroethylene.

12. The coating composition of claim 11, wherein the polytetrafluoroethylene is in at least one of a fiber form, preferably treated with a sodium naphthalene etch, and a powder form.

13. The coating composition of any of the preceding claims, wherein the at least one self-lubricating filler comprises at least one of graphite, graphite fluoride, hexagonal boron nitride, zinc oxide, molybdenum disulfide, and tungsten disulfide.

14. The coating composition of any of the preceding claims, wherein the coating composition is at least one of moldable and machinable.

15. A bearing (10) comprising:
an outer member (20) having a radially inwardly facing surface (22) that defines an interior area;
an inner member (40) disposed at least partially in the interior area, the inner member (40) having a radially outward facing bearing surface (42); and
the coating composition (30) of any of the preceding claims being one of
(i) adhered to the radially inwardly facing surface (22) and in sliding engagement with the radially outward facing bearing surface (42); and
(ii) adhered to the radially outward facing bearing surface (42) and in sliding engagement with the radially inwardly facing surface (22).
